# FASCICULE DE BREVET EUROPEEN

(11) **EP 3 359 422 B1**
(45) Date de publication et mention de la délivrance du brevet: **07.08.2019**
(21) Numéro de dépôt: 16775777.2
(22) Date de dépôt: 05.09.2016
(51) Int. Cl.: B60R 7/06

(54) **DISPOSITIF DE RANGEMENT À TIROIR INTÉGRÉ À UN VÉHICULE AUTOMOBILE**
SCHUBLADE IN EINEM KRAFTFAHRZEUG INTEGRIERT
DRAWER INTEGRATED IN A MOTOR VEHICLE

(30) Priorité: 06.10.2015 FR 1559487
(43) Date de publication de la demande: 15.08.2018
(73) Titulaire: Renault s.a.s, 92100 Boulogne-Billancourt (FR)
(72) Inventeur: FAURE, Jean Michel, 95600 Eaubonne (FR); MANSCOUR, Pascal, 78800 Houilles (FR); MARCEAU, Thierry, 92500 Rueil Malmaison (FR)
(86) Numéro de dépôt international: PCT/FR2016/052192
(87) Numéro de publication internationale: WO 2017/060576

(56) Documents cités:
- DE-A1- 2 918 222
- US-A- 870 140
- US-A- 2 199 898
- US-A1- 2011 037 361

## Description

### Domaine de l'invention :

La présente invention concerne un dispositif de rangement, autrement appelé « boite à gants » ou « vide-poche », typiquement intégré à une planche de bord d'un véhicule automobile. Plus particulièrement l'invention se rapporte à un dispositif de rangement comprenant une structure dans laquelle coulisse un tiroir entre une position fermée et une position ouverte suivant une direction longitudinale, le tiroir ayant la forme générale d'un caisson pourvu d'un plancher inférieur, d'une paroi de fond, de deux parois latérales et d'une paroi frontale délimitant un espace de rangement. Le tiroir est débouchant en partie supérieur, de sorte que l'espace de rangement est accessible par le dessus lorsque le tiroir est ouvert.

### Etat de la technique :

On connaît des dispositifs de rangement à tiroir intégrés dans des planches de bord de véhicule. De tels dispositifs de rangement connus comprennent classiquement une structure d'accueil du tiroir formant un logement de réception du tiroir. L'espace de réception est délimité par une cloison inférieure située sous le tiroir, une cloison supérieure située au-dessus du tiroir, une cloison de fond située à l'arrière du tiroir et des cloisons latérales encadrant latéralement le tiroir. De façon classique les parois supérieures et inférieures forment un angle non nul, en s'évasant du côté de la paroi frontale du tiroir. De même, la cloison supérieure forme typiquement un angle non nul avec la direction de coulissement du tiroir. Lorsque le tiroir est fermé, c'est-à-dire repoussé au maximum dans son logement de réception, la paroi de fond du tiroir s'approche au plus près de la cloison supérieure de la structure, interdisant tout basculement d'objet entre la paroi de fond et la cloison de fond. De plus la cloison de fond est située longitudinalement au plus près du tiroir ce qui réduit tout risque de basculement d'objet dans cet espace. En revanche, lorsque le tiroir coulisse vers sa position ouverte, l'inclinaison relative de la cloison supérieure par rapport à la direction longitudinale de coulissement engendre un espace ou jeu, que l'on mesure verticalement entre le bord supérieur de la paroi de fond et la cloison supérieure. Ce jeu s'accroit progressivement à mesure que le tiroir est déplacé vers sa position ouverte. En espèce le jeu s'accroit proportionnellement à la course longitudinale du tiroir en raison de la forme rectiligne de la direction de coulissement longitudinale et de la forme plane de la cloison supérieure. Il arrive classiquement que des objets présents dans l'espace de rangement basculent à l'arrière de la paroi de fond du tiroir et demeurent coincés entre celle-ci et la cloison de fond de la structure. Il peut être nécessaire de démonter le tiroir afin de libérer ces objets. Ces objets coincés empêchent en outre la fermeture du tiroir tant qu'ils ne sont pas retirés.

La publication DE 2918222 A1 divulgue un dispositif de rangement d'après le préambule de la revendication 1.

### But de l'invention :

L'invention a pour but de pallier tout ou partie des inconvénients précédents en proposant un dispositif de rangement qui empêche tout basculement d'objet à l'arrière du tiroir.

### Objet de l'invention :

A cet effet, l'invention a pour objet un dispositif de rangement comprenant une structure dans laquelle coulisse un tiroir entre une position fermée et une position ouverte suivant une direction de coulissement, le tiroir ayant la forme générale d'un caisson pourvu d'un plancher inférieur, d'une paroi de fond, de deux parois latérales et d'une paroi frontale délimitant un espace de rangement, caractérisé en ce que le dispositif comporte un moyen d'obturation du jeu considéré verticalement entre la paroi de fond et une cloison supérieure de la structure surplombant le tiroir dans sa position fermée, ce moyen d'obturation étant conformé pour compenser automatiquement une variation du jeu.

Un tel dispositif de rangement empêche tout basculement d'objets à l'arrière du tiroir, quelle que soit la forme du logement recevant le tiroir et les variations de hauteur de la cloison supérieure de ce logement.

Selon d'autres caractéristiques avantageuses de l'invention :
- la cloison supérieure de la structure est inscrite dans un plan formant un angle non nul avec la direction de coulissement du tiroir de sorte que le jeu considéré verticalement entre un bord supérieur de la paroi de fond et la cloison supérieure croit progressivement, notamment proportionnellement, en fonction de la course de coulissement du tiroir entre sa position fermée et sa position ouverte ;
- le moyen d'obturation est constitué d'une lamelle s'étendant sensiblement sur toute la largeur de la paroi de fond et dirigée vers l'espace de rangement du tiroir ;
- le moyen d'obturation est articulé sur un bord supérieur de la paroi de fond, entre d'une part une position sensiblement à angle droit par rapport à la paroi de fond lorsque le tiroir est dans la position fermée et d'autre part une position sensiblement à 45° par rapport à la paroi de fond lorsque le tiroir occupe une position longitudinale située sensiblement entre la position ouverte et une position médiane entre la position fermée et la position ouverte ;
- le dispositif d'obturation est venu de matière avec la paroi de fond, notamment par injection plastique, une zone de matière amincie étant conformée de façon à définir une articulation par charnière film ;
- au moins un moyen de rappel élastique est disposé entre la paroi de fond et le moyen d'obturation, de manière à redresser ce dernier vers une position de contact avec la cloison supérieure ;
- le moyen de rappel est un ressort à lame pourvu d'une extrémité de base encastrée dans une conformation de retenue inférieure de la paroi de fond et d'une extrémité mobile encastrée dans une conformation de retenue supérieure du moyen d'obturation ;
- le moyen d'obturation comporte une arête formant un nez recourbé vers l'espace de rangement du tiroir, le nez recourbé présentant une conformation extérieure convexe coopérant en contact avec la cloison supérieure ;

L'invention a également pour objet un ensemble de planche de bord d'un véhicule automobile comprenant un dispositif de rangement ayant tout ou partie des caractéristiques précédentes.

L'invention a encore pour objet un véhicule automobile comprenant un ensemble de planche de bord ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue de profil du dispositif de rangement selon l'invention, intégré à une planche de bord d'un véhicule automobile, le tiroir étant représenté à droite en position fermée et à gauche en position ouverte,
- la figure 2 représente une vue d'un détail de réalisation du dispositif de rangement de la figure 1, localisée sur le moyen d'obturation du jeu entre la paroi de fond du tiroir en position ouverte ou intermédiaire, et
- la figure 3 représente une vue d'un détail de réalisation du dispositif de rangement de la figure 1, localisée sur le moyen d'obturation du jeu entre la paroi de fond du tiroir en position fermée.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Dans le présent texte les termes « avant » et « arrière » sont utilisés en référence à l'implantation locale du dispositif de rangement, typiquement une boite à gant ou un vide-poche à tiroir, par rapport au passager du véhicule. Sauf indication contraire, le terme « arrière » doit donc être compris relativement à une zone éloignée du passager tandis que le terme « avant » doit être compris relativement à une zone proche du passager.
Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admis dans le cadre de l'invention.

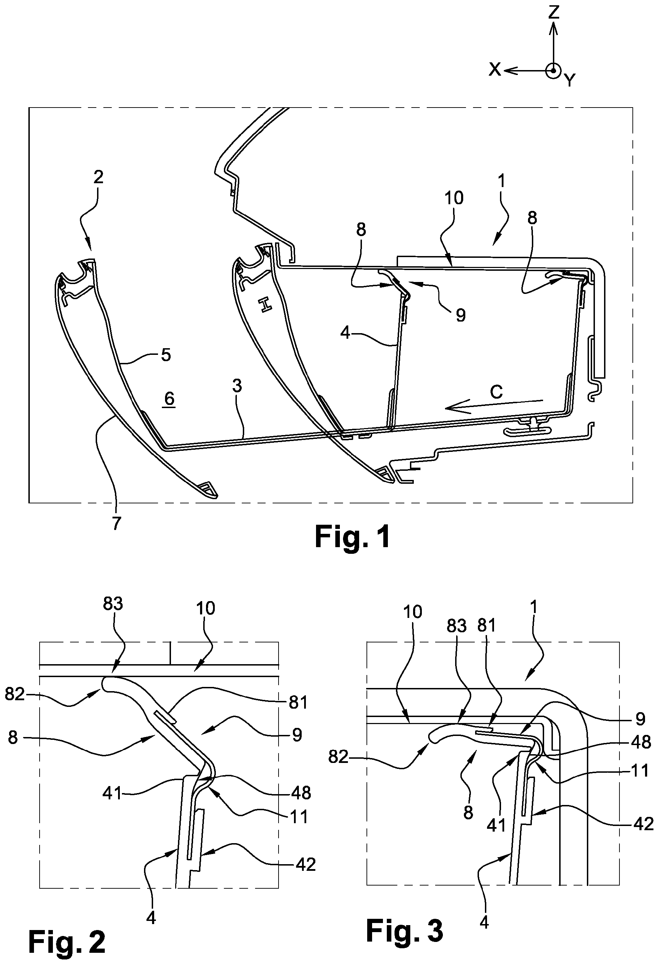

On a représenté à la figure 1 un dispositif de rangement selon l'invention, comprenant une structure 1 dans laquelle coulisse un tiroir 2 entre une position fermée, représentée à droite, et une position ouverte, représentée à gauche, suivant une direction de coulissement C. Dans l'exemple illustré la direction de coulissement C est inscrite dans un plan vertical longitudinal XZ du véhicule.
Le tiroir 2 a la forme générale d'un caisson pourvu d'un plancher inférieur 3, d'une paroi de fond 4, de deux parois latérales (non représentées dans la vue de profil, mais situées dans deux plans décalés suivant la direction transversale Y, ces plans étant perpendiculaires à cette direction Y), et d'une paroi frontale 5 délimitant un espace de rangement 6. La paroi frontale 5 est typiquement recouverte d'un élément d'habillage ou de garnissage 7 situé en avant du tiroir et en vis-à-vis du passager.
Les moyens de guidage et de coulissement du tiroir, non représentés, sont typiquement situés entre les parois latérales du tiroir 2 des cloisons latérales (non représentées) du logement solidaire de la structure 1 encadrant le tiroir 2.
Le dispositif comporte un moyen d'obturation 8 du jeu 9 considéré verticalement entre la paroi de fond 4 et une cloison supérieure 10 de la structure 1 surplombant le tiroir 2 dans sa position fermée. Ce moyen d'obturation 8 est conformé pour compenser automatiquement une variation du jeu vertical. Ce jeu 9 vertical varie en effet raison de la géométrie des éléments et de la direction de coulissement C du tiroir 2. Dans l'exemple illustré, la cloison supérieure 10 de la structure 1 est inscrite dans un plan formant un angle non nul avec la direction longitudinale C de coulissement du tiroir 2 de sorte que le jeu 9 considéré verticalement entre le bord supérieur 41 de la paroi de fond 4 et la cloison supérieure 10 croit progressivement en fonction de la course de coulissement du tiroir 2 entre sa position fermée et sa position ouverte.

Dans l'exemple illustré, ce jeu 9 croît proportionnellement à la course du tiroir 2 entre la position fermée et la position ouverte, au moins sur une partie de la course entre la position fermée et une position intermédiaire située entre les positions fermée et ouverte. Cette proportionnalité tient au fait que la direction de coulissement C est linéaire et que la cloison supérieure 10 est plane. L'angle formé entre la direction de coulissement C et que la cloison supérieure 10 est typiquement de quelques degrés, et est par exemple compris entre 0° (non inclus) et 15°.
Selon l'invention, le moyen d'obturation 8 est constitué d'une lamelle s'étendant sensiblement sur toute la largeur de la paroi de fond 4, cette largeur étant considérée suivant la direction transversale Y.
La lamelle est dirigée vers l'espace de rangement 6 du tiroir 2. Plus précisément, cette lamelle n'est pas inscrite dans le plan de la paroi de fond 4, mais forme un angle par rapport à cette paroi 4, qui est variable en fonction de l'importance du jeu 9 et donc de la position longitudinale du tiroir 2. Cet angle est tel que la lamelle dévie du côté de l'espace 6 par rapport au plan de la paroi de fond 4.
Le moyen d'obturation 8 est articulé sur le bord supérieur 41 de la paroi de fond 4, entre d'une part une position sensiblement à angle droit par rapport à la paroi de fond 4 lorsque le tiroir 2 est dans la position fermée et d'autre part une position sensiblement à 45° par rapport à la paroi de fond 4 lorsque le tiroir 2 occupe une position longitudinale située sensiblement entre la position ouverte et une position médiane entre la position fermée et la position ouverte. L'inclinaison à 45° est considérée entre le plan de la paroi de fond 4 et la lamelle.
Dans l'exemple illustré aux figures 1 à 3, le dispositif d'obturation 8 est venu de matière avec la paroi de fond 4, notamment par injection plastique, une zone de matière amincie étant conformée de façon à définir une articulation 48 par charnière film. Cette articulation 48 est réalisée autour d'un axe sensiblement parallèle à la direction transversale Y.
Comme on le voit aux figures 2 et 3, au moins un moyen de rappel 11 élastique est disposé entre la paroi de fond 4 et le moyen d'obturation 8, de manière à redresser ce dernier vers une position de contact avec la cloison supérieure 10. Cette position de contact varie et correspond à toutes les positions comprise entre les positions précitées, sensiblement à angle droit et à 45° par rapport à la paroi de fond 4.
Le moyen de rappel 11 est un ressort à lame pourvu d'une extrémité de base encastrée dans une conformation de retenue inférieure 42 de la paroi de fond 4 et d'une extrémité mobile encastrée dans une conformation de retenue supérieure 81 du moyen d'obturation 8. Dans un mode de réalisation de l'invention, le moyen de rappel peut s'étendre sur tout la longueur du moyen d'obturation considérée suivant la direction Y (c'est-à-dire sur la largeur du tiroir 2). Dans un autre mode de réalisation de l'invention, des moyens de rappel de dimensions plus réduites peuvent être disposés aux extrémités du moyen d'obturation ou dans des zones intermédiaires entre ces extrémités. Dans une autre variante de réalisation de l'invention, un moyen de rappel unique peut être situé au milieu du moyen d'obturation.
En référence aux figures 2 et 3, le moyen d'obturation 8 comporte une arête formant un nez recourbé 82 vers l'espace de rangement 6 du tiroir 2. Le nez recourbé présentant une conformation extérieure convexe 83 coopérant en contact avec la cloison supérieure 10.

Bien entendu, l'invention n'est pas limitée aux modes ou variantes de réalisation décrits précédemment et comprends tous les équivalents techniques de ces moyens.

## Revendications

1. Dispositif de rangement comprenant une structure (1) dans laquelle coulisse un tiroir (2) entre une position fermée et une position ouverte suivant une direction de coulissement (C), le tiroir (2) ayant la forme générale d'un caisson pourvu d'un plancher inférieur (3), d'une paroi de fond (4), de deux parois latérales et d'une paroi frontale (5) délimitant un espace de rangement (6), le dispositif comportant un moyen d'obturation (8) du jeu (9) considéré verticalement entre la paroi de fond (4) et une cloison supérieure (10) de la structure (1) surplombant le tiroir (2) dans sa position fermée, **caractérisé en ce que** le moyen d'obturation (8) est constitué d'une lamelle articulée sur un bord supérieur (41) de la paroi de fond (4) et est conformé pour compenser automatiquement une variation du jeu (9).

2. Dispositif de rangement selon la revendication 1, **caractérisé en ce que** la cloison supérieure (10) de la structure (1) est inscrite dans un plan formant un angle non nul avec la direction de coulissement (C) du tiroir (2) de sorte que le jeu (9) considéré verticalement entre un bord supérieur (41) de la paroi de fond (4) et la cloison supérieure (10) croit progressivement, notamment proportionnellement, en fonction de la course de coulissement du tiroir (2) entre sa position fermée et sa position ouverte.

3. Dispositif de rangement selon la revendication 2, **caractérisé en ce que** la lamelle s'étend sensiblement sur toute la largeur de la paroi de fond (4) et est dirigée vers l'espace de rangement (6) du tiroir (2).

4. Dispositif de rangement selon la revendication 2 ou 3, **caractérisé en ce que** le moyen d'obturation (8) est articulé sur le bord supérieur (41) de la paroi de fond (4), entre d'une part une position sensiblement à angle droit par rapport à la paroi de fond (4) lorsque le tiroir (2) est dans la position fermée et d'autre part une position sensiblement à 45° par rapport à la paroi de fond (4) lorsque le tiroir (2) occupe une position longitudinale située sensiblement entre la position ouverte et une position médiane entre la position fermée et la position ouverte.

5. Dispositif de rangement selon la revendication 4, **caractérisé en ce que** le dispositif d'obturation (8) est venu de matière avec la paroi de fond (4), notamment par injection plastique, une zone de matière amincie étant conformée de façon à définir une articulation (48) par charnière film.

6. Dispositif de rangement selon la revendication 5, **caractérisé en ce qu'**au moins un moyen de rappel (11) élastique est disposé entre la paroi de fond (4) et le moyen d'obturation (8), de manière à redresser ce dernier vers une position de contact avec la cloison supérieure (10).

7. Dispositif de rangement selon la revendication 6, **caractérisé en ce que** le moyen de rappel (11) est un ressort à lame pourvu d'une extrémité de base encastrée dans une conformation de retenue inférieure (42) de la paroi de fond (4) et d'une extrémité mobile encastrée dans une conformation de retenue supérieure (81) du moyen d'obturation (8).

8. Dispositif de rangement selon l'une quelconque des revendications précédentes, **caractérisé en ce que** le moyen d'obturation (8) comporte une arête formant un nez recourbé (82) vers l'espace de rangement (6) du tiroir (2), le nez recourbé (82) présentant une conformation extérieure convexe (83) coopérant en contact avec la cloison supérieure (10).

9. Ensemble de planche de bord d'un véhicule automobile **caractérisé en ce qu'**il comprend un dispositif de rangement selon l'une quelconque des revendications précédentes.

10. Véhicule automobile **caractérisé en ce qu'**il comprend un ensemble de planche de bord selon la revendication 9.

## Patentansprüche

1. Ablagevorrichtung umfassend eine Struktur (1), in der eine Schublade (2) zwischen einer geschlossenen Position und einer offenen Position in einer Gleitrichtung (C) gleitet, wobei die Schublade (2) die allgemeine Form eines Kastens aufweist, der mit einem unteren Boden (3), einer hinteren Wand (4), zwei Seitenwänden und einer vorderen Wand (5) versehen ist, die einen Ablageraum (6) begrenzen, wobei die Vorrichtung ein Mittel zum Verschließen (8) des Spiels (9) umfasst, das vertikal zwischen der hinteren Wand (4) und einer oberen Trennwand (10) der Struktur (1), welche die Schublade (2) in ihrer geschlossenen Position überragt, berücksichtigt wird, **dadurch gekennzeichnet, dass** das Mittel zum Verschließen (8) von einer Lamelle gebildet ist, die an einem oberen Rand (41) der hinteren Wand (4) angelenkt ist und dazu ausgebildet ist, eine Variation des Spiels (9) automatisch auszugleichen.

2. Ablagevorrichtung nach Anspruch 1, **dadurch gekennzeichnet, dass** die obere Trennwand (10) der Struktur (1) in einer Ebene liegt, die einen Winkel ungleich Null mit der Gleitrichtung (C) der Schublade (2) bildet, so dass das Spiel (9), das vertikal zwischen einem oberen Rand (41) der hinteren Wand (4) und der oberen Trennwand (10) berücksichtigt wird, in Abhängigkeit von der Gleitbahn der Schublade (2) zwischen ihrer geschlossenen Position und ihrer offenen Position, allmählich, insbesondere proportional, zunimmt.

3. Ablagevorrichtung nach Anspruch 2, **dadurch gekennzeichnet, dass** sich die Lamelle im Wesentlichen über die gesamte Breite der hinteren Wand (4) erstreckt und zu dem Ablageraum (6) der Schublade (2) hin gerichtet ist.

4. Ablagevorrichtung nach Anspruch 2 oder 3, **dadurch gekennzeichnet, dass** das Mittel zum Verschließen (8) an dem oberen Rand (41) der hinteren Wand (4) zwischen einerseits einer Position, die im Wesentlichen im rechten Winkel bezogen auf die hintere Wand (4) liegt, wenn sich die Schublade (2) in der geschlossenen Position befindet, und andererseits einer Position, die im Wesentlichen bei 45° bezogen auf die hintere Wand (4) liegt, wenn die Schublade (2) eine Längsposition einnimmt, die sich im Wesentlichen zwischen der offenen Position und einer mittleren Position zwischen der geschlossenen Position und der offenen Position befindet, angelenkt ist.

5. Ablagevorrichtung nach Anspruch 4, **dadurch gekennzeichnet, dass** die Verschlussvorrichtung (8) einstückig mit der hinteren Wand (4) ausgebildet ist, insbesondere durch Kunststoffeinspritzung, wobei ein Bereich dünneren Materials so ausgebildet ist, dass er ein Filmscharniergelenk (48) definiert.

6. Ablagevorrichtung nach Anspruch 5, **dadurch gekennzeichnet, dass** mindestens ein elastisches Rückstellmittel (11) zwischen der hinteren Wand (4) und dem Mittel zum Verschließen (8) angeordnet ist, um letzteres zu einer Kontaktposition mit der oberen Trennwand (10) zurückzustellen.

7. Ablagevorrichtung nach Anspruch 6, **dadurch gekennzeichnet, dass** das Rückstellmittel (11) eine Blattfeder ist, die mit einem Basisende, das in eine untere Halteausbildung (42) der hinteren Wand (4) eingelassen ist, und einem beweglichen Ende, das in eine obere Halteausbildung (81) des Mittels zum Verschließen (8) eingelassen ist, versehen ist.

8. Ablagevorrichtung nach einem der vorhergehenden Ansprüche, **dadurch gekennzeichnet, dass** das Mittel zum Verschließen (8) eine Kante aufweist, die eine gekrümmte Nase (82) in Richtung des Ablageraums (6) der Schublade (2) bildet, wobei die gekrümmte Nase (82) eine konvexe äußere Ausbildung (83) aufweist, die in Kontakt mit der oberen Trennwand (10) zusammenwirkt.

9. Armaturenbretteinheit eines Kraftfahrzeugs, **dadurch gekennzeichnet, dass** sie eine Ablagevorrichtung nach einem der vorhergehenden Ansprüche umfasst.

10. Kraftfahrzeug, **dadurch gekennzeichnet, dass** es eine Armaturenbretteinheit nach Anspruch 9 umfasst.

## Claims

1. Storage device comprising a structure (1) in which a drawer (2) slides between a closed position and an open position along a sliding direction (C), the drawer (2) having the general form of a box provided with a lower floor (3), a back wall (4), two lateral walls and a front wall (5), delimiting the storage space (6), the device comprising a means (8) for blocking the clearance (9), considered vertically, between the back wall (4) and an upper partition (10) of the structure (1) above the drawer (2) in the closed position thereof, **characterized in that** the blocking means (8) is constituted by an articulated blade on an upper edge (41) of the back wall (4) and is shaped in order automatically to offset a variation in clearance (9).

2. Storage device according to Claim 1, **characterized in that** the upper partition (10) of the structure (1) is inscribed in a plane forming a non-zero angle with the direction (C) of sliding of the drawer (2) such that the clearance (9), considered vertically, between an upper edge (41) of the back wall (4) and the upper partition (10) increases progressively, in particular proportionally, as a function of the sliding path of the drawer (2) between the closed position thereof and the open position thereof.

3. Storage device according to Claim 2, **characterized in that** the blade extends substantially over the entire width of the back wall (4) and is directed towards the storage space (6) of the drawer (2).

4. Storage device according to Claim 2 or 3, **characterized in that** the blocking means (8) is articulated on the upper edge (41) of the back wall (4), between, on the one hand, a position substantially at right angles relative to the back wall (4) when the drawer (2) is in the closed position and, on the other, a position substantially at 45° to the back wall (4) when the drawer (2) occupies a longitudinal position located substantially between the open position and a midway position between the closed position and the open position.

5. Storage device according to Claim 4, **characterized in that** the blocking device (8) is made as a single piece with the back wall (4), particularly by means of plastic injection, an area of thinner material being formed such as to define a film-hinge articulation (48).

6. Storage device according to Claim 5, **characterized in that** at least one elastic return means (11) is arranged between the back wall (4) and the blocking means (8) so as to return the latter towards a position of contact with the upper partition (10).

7. Storage device according to Claim 6, **characterized in that** the return means (11) is a leaf spring provided with a base end embedded in a lower retention formation (42) of the back wall (4) and a movable end embedded in an upper retention formation (81) of the blocking means (8) .

8. Storage device according to any one of the preceding claims, **characterized in that** the blocking means (8) comprises an edge forming a nose (82) curved towards the storage space (6) of the drawer (2), the curved nose (82) having a convex exterior formation (83) interacting in contact with the upper partition (10).

9. Motor vehicle dashboard assembly **characterized in that** it comprises a storage device according to any one of the preceding claims.

10. Motor vehicle **characterized in that** it comprises a dashboard assembly according to Claim 9.
